# EUROPEAN PATENT SPECIFICATION

(11) **EP 1 803 980 B1**
(45) Date of publication and mention of the grant of the patent: **14.12.2011**
(21) Application number: 06112100.0
(22) Date of filing: 31.03.2006
(51) Int. Cl.: F16K 1/12

(54) **Hollow piston valve**
Ventil mit Hohlkolben
Soupape à piston creux

(30) Priority: 28.12.2005 IL 17287705
(43) Date of publication of application: 04.07.2007
(73) Proprietor: DAN GEVA, 27206 Kiryat Bialik (IL)
(72) Inventor: GEVA, DAN, 27206 Kiryat Bialik (IL)
(74) Representative: Intès, Didier Gérard André

(56) References cited:
- EP-A- 0 566 543
- EP-A- 1 235 012
- EP-A2- 1 348 899
- FR-A- 1 168 123

## Description

The present invention relates to directional flow control of pressurized fluids.

More particularly, the invention provides an improved flow modular valve for fluids which can readily be adapted for two-way or three-way operation, for 90° or straight though flow. Modular construction allows the ready replacement of worn seals and of other components. The valve can also be readily changed for manual operation, mechanical operation, spring operation in one direction and pilot fluid movement in one or two directions.

Valves for fluid control may be globe valves, butterfly valves, spool valves, diaphragm and others. The present invention is however concerned only with sliding hollow piston valves.

Fluid valves of various types have been in extensive use for many decades. While the main applications are hydraulic or pneumatically-operated machinery, valves are also used to control the flow of a product or process, as well as liquids such as fuels, beverages, and water.

Some valve manufacturers design their valves in a modular manner, so that a valve to a desired specification can be assembled from a selection of a small number of parts which are quantity produced. Modular valve systems are known, and seen in the following US Patents:
3,989,058 to Jackson et al disclosing a spool valve;
4,979,530 to Breda. also a spool valve;
5,111,840 to Miller et al., again a spool valve;
5,313,985 to Donner, a complex solenoid operated valve; and
5,749,562 to Möller et al., multiple interconnected valves.

The above disclosures do not relate to the sliding piston type valve, which is most advantageous for large flows through a moderately sized valve body. To prevent unnecessary pressure losses a valve should provide as straight a path as possible and a consistent flow area for the fluid flowing therethrough. The sliding piston type valve is the most appropriate for this purpose.

Besides, European patent n° EP1348899 discloses a hollow sliding piston valve. In this valve, several small-sized valves components are set inside an integral housing, whereby the disassembly of these components is not very easy.

European patent n° EP1235012 discloses another hollow sliding piston valve. The piston is set in a central housing which contains a solenoid actuator actuating the piston, comprises an inlet for pilot command, and further has a shoulder limiting the movements of the piston in one direction.

French patent n°FR 1168123 discloses another hollow sliding piston valve. In this valve, a central housing comprises inlets for pilot pressure fluid, but also includes a shoulder for limiting the movements of the piston in one direction.

As the housings of the valves disclosed by patents EP1235012 and FR1168123 fulfill these different functions, these valves show limited modularity and the assembly and disassembly thereof is not so easy.

It is therefore one of the objects of the present invention to obviate the disadvantages of prior art valves and to provide a sliding piston valve having low fluid resistance relative to the valve size.

It is a further object of the present invention to provide a modular valve which can easily be converted from a two-way valve to a three-way valve.

It is a further object of the present invention to provide a modular valve which can easily be dismantled and re-assembled for maintenance purposes.

The present invention achieves the above objects by providing a modular sliding piston fluid valve as defined in claim 1.

In a preferred embodiment of the present invention there is provided a sliding piston valve wherein seals are provided in contact with said sliding piston to prevent leakage of compressed gas.

In a further preferred embodiment of the present invention there is provided a valve wherein seals are provided in contact with said sliding piston to prevent leakage of compressed gas.

In another preferred embodiment of the present invention there is provided a valve wherein seals are not provided and said valve is used to control liquid flow.

In a further preferred embodiment of the present invention there is provided a valve wherein said outlet port is a port disposed at about 90° to the axis of said piston, and the opening serving the in-line outlet port is closed by a seal cover irrespective of the piston position, and wherein said third port serves as the outlet port.

In yet a further preferred embodiment of the present invention there is provided a valve wherein said piston is provided with a shoulder and a spring is arranged to contact said shoulder to urge said piston in the direction of said inlet port to close same.

In another preferred embodiment of the present invention there is provided a valve wherein said piston is provided with a shoulder and the housing is further provided with at least one additional inlet for pilot pressure fluid to apply pressure to at least one side of said shoulder to move said sliding piston in a desired axial direction.

In another preferred embodiment of the present invention there is provided valve wherein all ports are active to form a three-way valve.

In a further preferred embodiment of the present invention there is provided a valve wherein movement of the piston to be proximate to said inlet port allows fluid flow in either direction between said outlet port and said third port.

In a most preferred embodiment of the present invention there is provided a valve wherein movement of the piston to be proximate to said outlet port causes said piston to block fluid flow through said third port.

In European Patent no. EP 0 566 543 A1 there is described and claimed a sliding piston two-way valve for pneumatic application. The valve comprises 4 basic components; the main housing including a first port and the pilot control ports, a large diameter screw-in component comprising the second port, a conical deflector and the sliding piston. The large diameter screw thread is likely to become inoperable in the course of valve usage, and is subject to leakage when pilot pressure is applied. The seal elements are difficult to replace. There is no provision for conversion to a three-way valve.

In contradistinction thereto, the present invention is adapted to be used as a three-way valve and as a 90° 2-way or three-way valve. The valve of the present invention comprises several separate but simple components, each of which can be individually replaced at moderate cost. No large diameter screw thread is needed. The fasteners used for assembly are low cost of the-shelf screws. A hydraulic version of the valve is provided.

It will thus be realized that the novel valve of the present invention serves to overcome the drawbacks of prior art valves. The valve is easily maintained, and when in use provides low flow resistance. Uses of the valve are many, because configuration changes are easily effected by changing some of the components.

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

In the drawings:
FIG. 1 is sectioned elevational view of a preferred embodiment of the valve according to the invention;
FIG. 2 is a sectioned elevational view of a detail of the valve;
FIG. 3 is a sectioned elevational view of an embodiment intended for hydraulic service;
FIG. 4 is a sectioned elevational view of a 90° valve intended for pneumatic service;
FIG. 5 is a sectioned elevational view of a pneumatic three-way valve showing the modular arrangement of the assembly;
FIG. 6 is a sectioned elevational view of a three-way valve pressure operated spring return;
   and
FIG. 7 is a sectioned elevational view of a hydraulic three-way valve;
FIG. 8 is a sectioned elevational view of an embodiment of the inlet part;
FIG. 9 is a sectioned elevational view of a further embodiment of the inlet part.

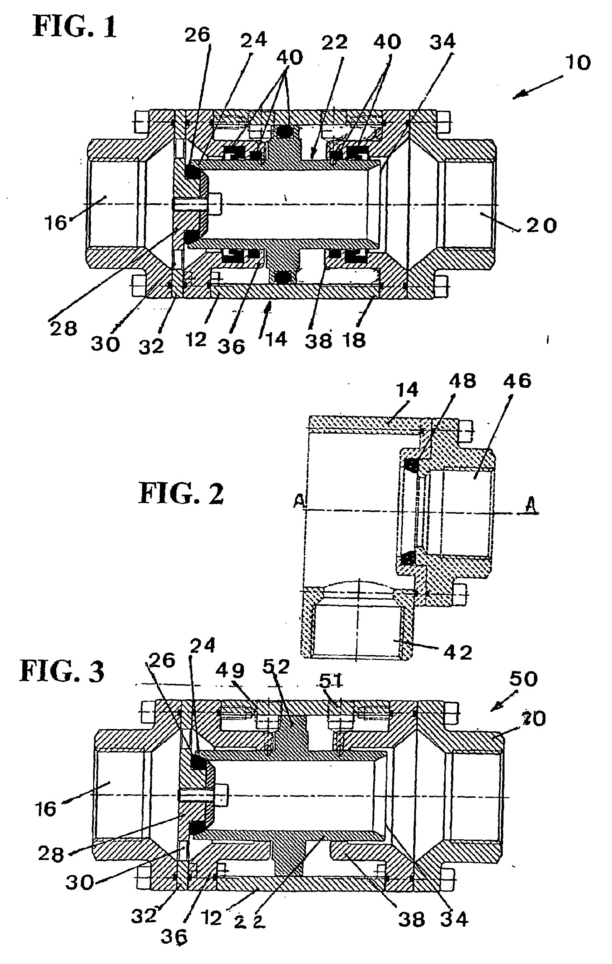

There is seen in FIGS. 1 and 2 a modular, sliding-piston, pneumatic two-way valve 10. Attached to the left end 12 of the valve housing 14 is an inlet port 16. At a right end 18 of the housing 14 there is attached an outlet port 20.

An axially-slidable piston 22 is provided with a chamfered inner edge 24 which presses against the seal 26 of a central boss 28 when said piston 22 is in its left position as seen in the diagram. As is seen in the diagram the inlet valve is closed when the chamfered edge 24 is pressed against the seal 26.

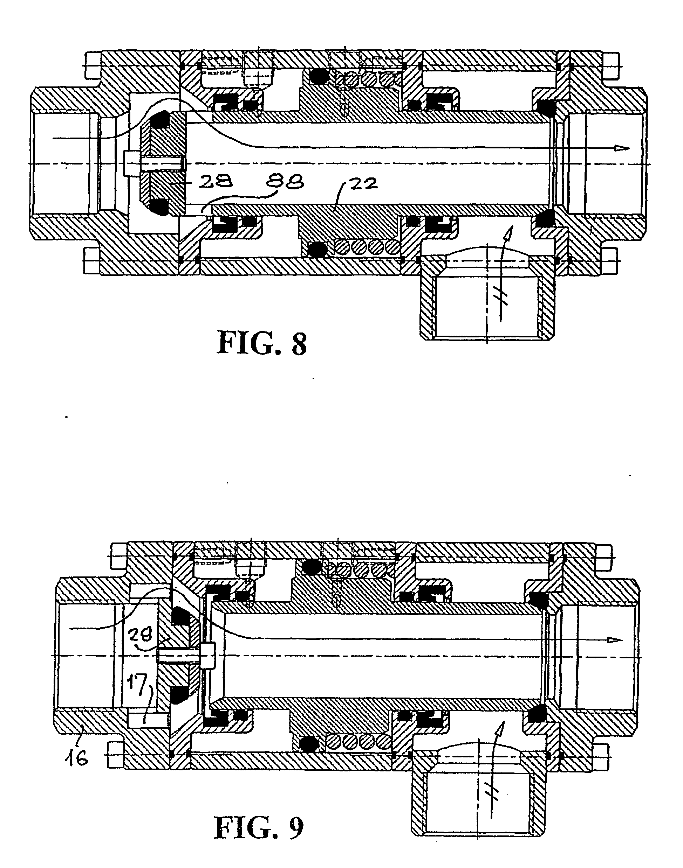

Said central boss 28 is either part of disc 32 as seen in FIG. 1 or being connected to piston 22 as illustrated in FIG. 8 or connected to inlet 16 or integral therewith as illustrated in FIG. 9.

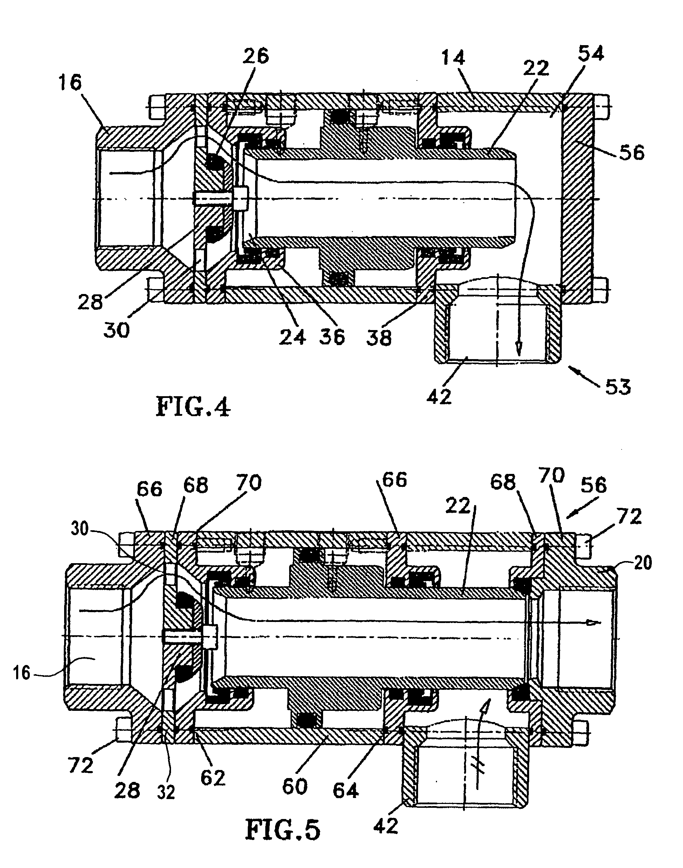

The piston 22 seen in the present embodiment is fully open at both of its extremities. Thus when the piston 22 is moved towards the outlet port 20, as will be seen for example in FIG. 5, fluid from the inlet port 16 flows freely through apertures 30 piercing the disc 32 supporting the central boss 28. Next the fluid passes between the central boss seal 26 and the piston chamfered edge 24. Fluid enters the inner part of the piston 22 and flows through the opposite open end 34 thereof and through the outlet port 20.

The figure also shows a left stop flange 36 and a right stop flange 38, both of which are utilized to carry seal elements 40. The various seals 40 are provided to contact external faces of the sliding piston 22 to prevent leakage of air when the valve 10 is used as part of a pneumatic circuit.

As seen in FIG. 2, the housing 14 has provision for the possible addition of a third port 42 disposed at about 90° to the axis AA of the sliding piston 22. The housing aperture 44 accommodating third port 42 is closed by a suitable plug or cover (not seen) when the third port is not used, as in the present embodiment.

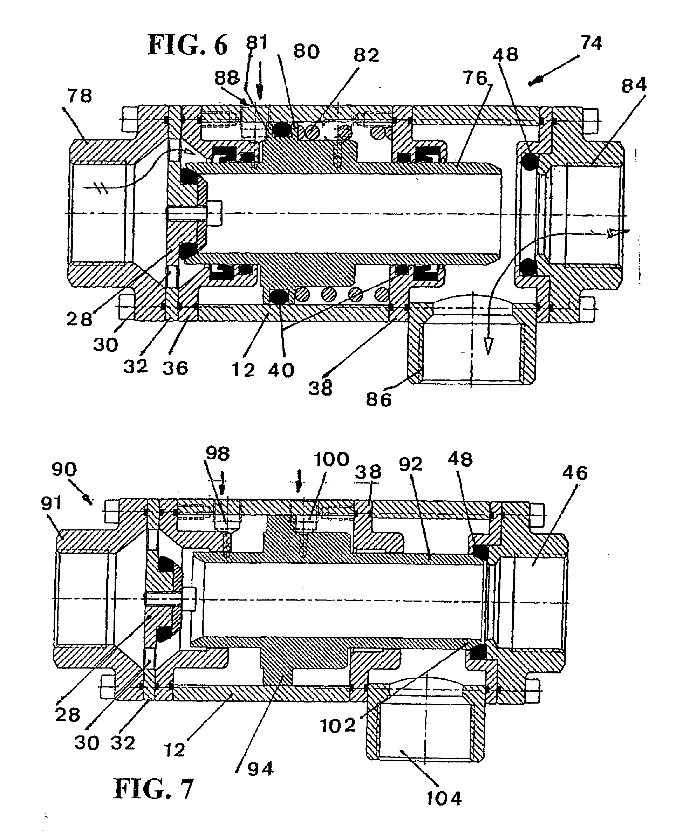

The outlet port 46 and the seal 48 will be described with reference to FIG. 7.

With reference to the rest of the figures, similar reference numerals have been used to identify similar parts.

FIG. 3 illustrates a modular two-way hydraulic valve 50 seen in its closed position. With the exception of the seal 26, seals are not provided. In other respects the valve is similar to the valve 10 described with reference to FIG. 1.

Inlet ports 49, 51 for pilot pressure are provided. Pilot hydraulic pressure can thus act upon either side of the shoulder 52 attached to the sliding piston 22. Hydraulic actuation of valves is particularly useful for automatic operation of large valves.

The elimination of seals subjected to the high pressures typical in hydraulic applications simplifies both design and construction and reduces costs. Due to the higher viscosity of fluids, metal to metal sealing is adequate to prevent leakage, and thus most seals are eliminated.

Seen in FIG. 4 is a modular pneumatic two-way 90° valve 53 shown in its open (piston at right side) position. The outlet port is the third port 42 disposed at 90° to the axis of the piston 22. Fluid (air) flows is the same manner as described with reference to FIG. 1, except that the third port 42 functions as the outlet port.

Moving the piston 22 towards the left brings the chamfered inner edge 24 into contact with the seal 26 of the central boss 28 to seal the inlet port 16 and stop flow.

With regard to the large opening 54 remaining after the outlet port 20 seen in FIG. 1 is removed, a thick disk cover 56 is rigidly attached to the housing 14 to seal opening 54. However if it is preferred to leave the outlet port 20 in place, the port can easily be plugged and sealed.

In either case, all fluid entering the valve 53 must leave via the third port 42.

Referring now to FIG. 5, there is depicted a modular pneumatic three-way valve 58 comprising a substantially cylindrical outer housing 60 having two end faces 62, 64. At least three valve components, numbered 66, 68, 70 irrespective of their form, are axially stacked and attached to each end face 62, 64 of the housing 60 by a plurality of spaced-apart threaded fasteners 72, preferably corrosion-protected hexagon socket cap screws. Thus when it becomes necessary to replace any of the seals or other components the valve is easily dismantled and reassembled.

FIG. 6 shows a three-way pneumatic valve 74 wherein the sliding piston 76 is seen in its left position and has closed the inlet port 78. The sliding piston 76 is provided with a shoulder 80. A compression spring 82 is arranged to contact the shoulder 80, and as seen in the figure the spring 82 has moved the piston 76 in the left direction towards the inlet port 78 to close same. This movement of the piston 76 allows fluid flow in either direction between the outlet port 84 and the third port 86.

The inlet port 78 is opened by admitting pilot pneumatic pressure through port 88. Air pilot pressure on the shoulder 81 overcomes the resistance of the compression spring 82 and moves the piston towards the right to contact the seal 48 to seal port 86. Release of pilot air pressure allows the spring 82 to return the piston 76 to its original position.

FIG. 7 illustrates a three-way modular hydraulic valve 90 seen in its open-inlet position, wherein fluid flows from the inlet port 91 through the piston 92 to exit via the port 46. The sliding piston 92 is provided with a shoulder 94. The housing 96 is further provided with two additional inlets 98, 100 for hydraulic pilot pressure to be applied to either side of the shoulder 94 and so to move the sliding piston 92 in a desired axial direction.

While opening the inlet port 91 by moving in a rightward direction the piston 92, being provided with an external chamfer 102, presses against the seal 48 to prevent leakage of fluid (hydraulic oil) flowing through the piston 92 and out through the port 46. Simultaneously the piston 92 seals the third port 104.

FIG. 8 illustrates a further embodiment when the central boss 28 is connected to piston 22. The fluid flows through ports 88 provided at one end of piston 22.

FIG. 9 illustrates yet a further embodiment when the central boss 28 is connected or integral with port 16. The fluid flows through opening 17.

The scope of the described invention is intended to include all embodiments coming within the meaning of the following claims. The foregoing examples illustrate useful forms of the invention, but are not to be considered as limiting its scope, as those skilled in the art will be aware that additional variants and modifications of the invention can readily be formulated without departing from the meaning of the following claims.

## Claims

1. A modular hollow sliding piston fluid valve, comprising:
- a housing (14) comprising a substantially cylindrical outer housing member having two end faces (12,18),
- at least one inlet port (16) and at least one outlet port (20) both attached to the housing (14), and
- an axially-slidable piston (22) arranged inside said housing and provided with means to close said at least one inlet port (16) when in proximity thereto, said piston (22) being configured with at least one opening allowing fluid to enter the inner part of said piston from said inlet port and flow through the opposite open portion (34) of said piston and through said outlet port (20) when said piston is moved in proximity to said outlet port,
said piston further presenting a shoulder (80) cooperating with stop flanges (36,38) facing each other on opposite sides of the shoulder (80) along the axial direction of the piston (22) in order to limit the movement of the piston (22),
- a first plurality of valve components being axially stacked and attached to the first end face (12) of the housing member by a plurality of radially spaced-apart threaded fasteners (72),
- a second plurality of valve components being axially stacked and attached to the second end face (18) of said housing member by a plurality of radially spaced-apart threaded fasteners (72),
**characterized in that** the housing member is a tube portion, and **in that** the stop flanges (36,38) are provided on the first and second pluralities of valve components, respectively.

2. The valve as claimed in claim 1, **characterized in that** seals (40) are provided in contact with said sliding piston (22) to prevent leakage of fluids at both ends of said housing.

3. The valve as claimed in claim 1 or 2, **characterized in that** seals are not provided to the sliding piston and said valve is used to control liquid flow.

4. The valve as claimed in any one of claims 1 to 3, **characterized in that** a spring (82) is arranged to contact said shoulder to urge said piston in the direction of said inlet or outlet ports to close or open same.

5. The valve as claimed in any one of claims 1 to 4, **characterized in that** the housing is further provided with at least one additional inlet (98, 100) for pilot pressure fluid to apply pressure to at least one side of said shoulder to move said sliding piston in a desired axial direction.

6. The valve as claimed in any one of claims 1 to 5, **characterized in that** one of said valve components is a central seal boss (26).

7. The valve as claimed in claim 6, **characterized in that** said central boss (26) is part of a disc.

8. The valve as claimed in claim 6 or 7, **characterized in that** said central boss is connected to said inlet port.

9. The valve as claimed in any one of claims 1 to 8, **characterized in that** a portion of said housing (14) comprises a third port (42) disposed at about 90° to the axis of said piston (22), and **in that** said portion is axially stacked and attached to an end face (64) of said housing member.

10. The valve as claimed in claim 9, **characterized in that** the opening of the outlet port disposed in-line with the inlet port and the piston, is closed by a seal cover (56) irrespective of the piston position, and wherein said third port (42) serves as the outlet port.

11. The valve as claimed in claim 9, **characterized in that** all ports are active to form a three-way valve.

12. The valve as claimed in claim 11, **characterized in that** movement of the piston (22) to be proximate to said inlet port allows fluid flow in either direction between said outlet port and said third port.

13. The valve as claimed in claim 11 or 12, **characterized in that** movement of the piston (22) to be proximate to said outlet port causes said piston to block fluid flow through said third port.

## Patentansprüche

1. Modulares Fluidventil mit hohlem Gleitkolben, umfassend:
- ein Gehäuse (14), das ein im wesentlichen zylindrisches, äußeres Gehäuseglied mit zwei Endflächen (12, 18) umfaßt,
- mindestens eine Einlaßöffnung (16) und mindestens eine Auslaßöffnung (20), die beide an dem Gehäuse (14) befestigt sind, und
- einen in Axialrichtung verschieblichen Kolben (22), der in dem Gehäuse angeordnet und mit Mitteln zum Verschließen der mindestens einen Einlaßöffnung (16) bei seiner Annäherung an diese versehen ist, wobei der Kolben (22) eine Konfiguration mit mindestens einer Öffnung besitzt, durch die ein Fluid von der Einlaßöffnung in den Innenteil des Kolbens eintreten und den gegenüberliegenden offenen Abschnitt (34) des Kolbens durchströmen und bei Bewegung des Kolbens in die Nähe der Auslaßöffnung (20) durch die Auslaßöffnung hindurch strömen kann,
wobei der Kolben außerdem eine Schulter (80) aufweist, die mit Anschlagflanschen (36, 38) zusammenwirkt, die auf einander entgegengesetzten Seiten der Schulter (80) entlang der Axialrichtung des Kolbens (22) einander gegenüberliegen, um die Bewegung des Kolbens (22) zu beschränken,
- eine erste Mehrzahl von Ventilteilen, die in Axialrichtung aufgeschichtet und mit mehreren in Radialrichtung beabstandeten, mit Gewinde versehenen Befestigern (72) an der ersten Endfläche (12) des Gehäuseglieds befestigt sind,
- eine zweite Mehrzahl von Ventilteilen, die in Axialrichtung aufgeschichtet und mit mehreren in Radialrichtung beabstandeten, mit Gewinde versehenen Befestigern (72) an der zweiten Endfläche (12) des Gehäuseglieds befestigt sind,
**dadurch gekennzeichnet, daß** das Gehäuseglied ein Rohrabschnitt ist und die Anschlagflansche (36, 38) jeweils an der ersten und der zweiten Mehrzahl der Ventilteile vorgesehen sind.

2. Ventil nach Anspruch 1, **dadurch gekennzeichnet, daß** Dichtungen (40) in Kontakt mit dem Gleitkolben (22) vorgesehen sind, um den Leckverlust von Fluids an beiden Enden des Gehäuses zu verhindern.

3. Ventil nach Anspruch 1 oder 2, **dadurch gekennzeichnet, daß** an dem Gleitkolben keine Dichtungen vorgesehen sind und das Ventil zum Steuern des Flüssigkeitsstroms verwendet wird.

4. Ventil nach einem der Ansprüche 1 bis 3, **dadurch gekennzeichnet, daß** eine Feder (82) in Kontakt mit der Schulter kommen kann, um den Kolben in der Richtung der Einlaß- und der Auslaßöffnung zu schieben, um dieselben zu schließen und zu öffnen.

5. Ventil nach einem der Ansprüche 1 bis 4, **dadurch gekennzeichnet, daß** das Gehäuse außerdem mit mindestens einem zusätzlichen Einlaß (98, 100) für ein Steuerdruckfluid versehen ist, um auf mindestens eine Seite der Schulter einen Druck auszuüben, um den Gleitkolben in einer gewünschten Axialrichtung zu bewegen.

6. Ventil nach einem der Ansprüche 1 bis 5, **dadurch gekennzeichnet, daß** eines der Ventilteile eine mittige Dichtwulst (26) ist.

7. Ventil nach Anspruch 6, **dadurch gekennzeichnet, daß** die mittige Dichtwulst (26) Teil einer Scheibe ist.

8. Ventil nach Anspruch 6 oder 7, **dadurch gekennzeichnet, daß** die mittige Dichtwulst mit der Einlaßöffnung verbunden ist.

9. Ventil nach einem der Ansprüche 1 bis 8, **dadurch gekennzeichnet, daß** ein Abschnitt des Gehäuses (14) eine dritte Öffnung (42) umfaßt, die etwa 90° zu der Achse des Kolbens (22) angeordnet ist, und der Abschnitt in Axialrichtung aufgeschichtet und an einer Endfläche (64) des Gehäuseglieds befestigt ist.

10. Ventil nach Anspruch 9, **dadurch gekennzeichnet, daß** der Öffnungsteil der Auslaßöffnung, die in Reihe mit der Einlaßöffnung und dem Kolben angeordnet ist, unabhängig von der Stellung des Kolbens von einem Dichtungsdeckel (56) verschlossen ist, und wobei die Öffnung (42) als Auslaßöffnung dient.

11. Ventil nach Anspruch 9, **dadurch gekennzeichnet, daß** alle Öffnungen an der Ausbildung eines Dreiwegeventils beteiligt sind.

12. Ventil nach Anspruch 11, **dadurch gekennzeichnet, daß** auf Grund der Bewegung des Kolbens (22) bis nahe an die Einlaßöffnung ein Fluid in jeder der beiden Richtungen zwischen der Auslaßöffnung und der dritten Öffnung strömen kann.

13. Ventil nach Anspruch 11 oder 12, **dadurch gekennzeichnet, daß** auf Grund der Bewegung des Kolbens (22) bis nahe an die Auslaßöffnung bewirkt wird, daß der Kolben den Strom des Fluids durch die dritte Öffnung hindurch sperrt.

## Revendications

1. Soupape à fluide modulaire à piston coulissant creux, comportant :
- un boîtier (14) comportant un élément de boîtier externe globalement cylindrique ayant deux faces d'extrémité (12, 18),
- au moins un orifice d'entrée (16) et au moins un orifice de sortie (20) fixés tous les deux sur le boîtier (14), et
- un piston axialement coulissant (22) disposé à l'intérieur dudit boîtier et pourvu de moyens destinés à fermer ledit au moins un orifice d'entrée (16) quand il est à proximité de celui-ci, ledit piston (22) étant configuré avec au moins une ouverture permettant à du fluide d'entrer dans la partie intérieure dudit piston par ledit orifice d'entrée et de s'écouler à travers la partie ouverte opposée (34) dudit piston et à travers ledit orifice de sortie (20) quand ledit piston est déplacé à proximité dudit orifice de sortie,
ledit piston présentant en outre un épaulement (80) coopérant avec des brides de butée (36, 38) se faisant face sur des côtés opposés de l'épaulement (80) le long de la direction axiale du piston (22) afin de limiter le mouvement du piston (22),
- une première pluralité de composants de soupape qui sont axialement empilés et fixés sur la première face d'extrémité (12) de l'élément de boîtier par une pluralité d'éléments de fixation filetés radialement espacés (72),
- une deuxième pluralité de composants de soupape qui sont axialement empilés et fixés sur la deuxième face d'extrémité (18) dudit élément de boîtier par une pluralité d'éléments de fixation filetés radialement espacés (72), **caractérisé en ce que** l'élément de boîtier est une partie de tube, et **en ce que** les brides d'arrêt (36, 38) sont prévues sur les première et deuxième pluralités de composants de soupape, respectivement.

2. Soupape selon la revendication 1, **caractérisée en ce que** des joints d'étanchéité (40) sont prévus en contact avec ledit piston coulissant (22) afin d'empêcher une fuite de fluides aux deux extrémités dudit boîtier.

3. Soupape selon la revendication 1 ou 2, **caractérisé en ce que** des joints d'étanchéité ne sont pas prévus sur le piston coulissant et ladite soupape est utilisée pour commander un écoulement liquide.

4. Soupape selon l'une quelconque des revendications 1 à 3, **caractérisée en ce qu'**un ressort (82) est prévu pour entrer en contact avec ledit épaulement afin de pousser ledit piston dans la direction desdits orifices d'entrée ou de sortie afin de fermer ou ouvrir ceux-ci.

5. Soupape selon l'une quelconque des revendications 1 à 4, **caractérisée en ce que** le boîtier est en outre pourvu d'au moins une entrée additionnelle (98, 100) pour du fluide sous pression de pilotage afin d'appliquer de la pression sur au moins un côté dudit épaulement de façon à déplacer ledit piston coulissant dans une direction axiale souhaitée.

6. Soupape selon l'une quelconque des revendications 1 à 5, **caractérisée en ce que** l'un desdits composants de soupape est un bossage central de joint d'étanchéité (26).

7. Soupape selon la revendication 6, **caractérisée en ce que** ledit bossage central (26) fait partie d'un disque.

8. Soupape selon la revendication 6 ou 7, **caractérisée en ce que** ledit bossage central est relié audit orifice d'entrée.

9. Soupape selon l'une quelconque des revendications 1 à 8, **caractérisée en ce que** qu'une partie dudit boîtier (14) comporte un troisième orifice (42) disposé à environ 90° par rapport à l'axe dudit piston (22), et **en ce que** ladite partie est axialement empilée et fixée sur une face d'extrémité (64) dudit élément de boîtier.

10. Soupape selon la revendication 9, **caractérisée en ce que** l'ouverture de l'orifice de sortie disposée en ligne avec l'orifice d'entrée et le piston, est fermée par un couvercle de joint d'étanchéité (56) indépendamment de la position de piston, et ledit troisième orifice (42) sert d'orifice de sortie.

11. Soupape selon la revendication 9, **caractérisée en ce que** tous les orifices sont actifs pour former une soupape à trois voies.

12. Soupape selon la revendication 11, **caractérisée en ce qu'**un mouvement du piston (22) afin d'être à proximité dudit orifice d'entrée permet un écoulement de fluide dans chaque direction entre ledit orifice de sortie et ledit troisième orifice.

13. Soupape selon la revendications 11 ou 12, **caractérisée en ce qu'**un mouvement du piston (22) afin d'être à proximité dudit orifice de sortie amène ledit piston à bloquer un écoulement de fluide à travers ledit troisième orifice.
